(19) Europäisches Patentamt / European Patent Office / Office européen des brevets

(11) **EP 4 280 602 A1**

(12) **EUROPEAN PATENT APPLICATION**
published in accordance with Art. 153(4) EPC

(43) Date of publication:
**22.11.2023 Bulletin 2023/47**

(21) Application number: **21927645.8**

(22) Date of filing: **25.11.2021**

(51) International Patent Classification (IPC):
**H04N 19/103** $^{(2014.01)}$

(52) Cooperative Patent Classification (CPC):
**H04N 19/103; H04N 19/176; H04N 19/513;
H04N 21/2343; H04N 21/4402**

(86) International application number:
**PCT/CN2021/133290**

(87) International publication number:
**WO 2022/179221 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.02.2021 CN 202110206726**

(71) Applicant: **Huawei Technologies Co., Ltd.
Shenzhen, Guangdong 518129 (CN)**

(72) Inventors:
• **CHEN, Huanbang
  Shenzhen, Guangdong 518129 (CN)**
• **YANG, Haitao
  Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **MOTION VECTOR (MV) CONSTRAINTS AND TRANSFORM CONSTRAINTS IN VIDEO ENCODING**

(57) An apparatus includes a memory; and a processor, coupled to the memory and configured to: obtain candidate MVs corresponding to a neighboring block adjacent to a current block in a video frame, generate a candidate list of the candidate MVs, select final MVs from the candidate list, and apply a constraint to the final MVs or a transform to obtain constrained MVs. An apparatus includes a memory; and a processor, coupled to the memory and configured to: obtain candidate MVs corresponding to a neighboring block adjacent to a current block in a video frame, generate a candidate list of the candidate MVs, apply a constraint to the candidate MVs or a transform to obtain constrained MVs, and select final MVs from the constrained MVs.

400

Start

410 — Obtain candidate MVs

420 — Generate a candidate list of the candidate MVs

430 — Select final MVs from the candidate list

440 — Apply a constraint to the final MVs or a transform to obtain constrained MVs

450 — Calculate an MVF based on the constrained MVs

460 — Perform MCP based on the MVF to generate a prediction block of a current block

470 — Encode an MV index

End

FIG. 4

EP 4 280 602 A1

## Description

**TECHNICAL FIELD**

This application relates to the image processing field, and more specifically, to a motion vector processing method and apparatus.

**BACKGROUND**

A relatively large amount of data is used in a video, and therefore a bandwidth of a relatively large size is used for video transmission. However, many networks operate based on their bandwidth capacities or bandwidths near the bandwidth capacities. In addition, more data needs to be used for high video quality required by a customer. Therefore, it is necessary to reduce an amount of data used by a video and improve video quality. One solution is to compress a video in an encoding process and decompress the video in a decoding process. Improving compression and decompression technologies is a focus of research and development.

**SUMMARY**

In an embodiment, this application includes an apparatus. The apparatus includes a memory; and a processor, coupled to the memory and configured to: obtain candidate MVs corresponding to a neighboring block adjacent to a current block in a video frame, generate a candidate list of the candidate MVs, select final MVs from the candidate list, and apply a constraint to the final MVs or a transform to obtain constrained MVs. In some embodiments, the constraint specifies that a first absolute value of a first difference between a first final MV and a second final MV is less than or equal to a first quantity, and the first quantity is determined by the threshold and a width of the current block; and the constraint further specifies that a second absolute value of a second difference between a third final MV and a fourth final MV is less than or equal to a second quantity, and the second quantity is determined by the threshold and a height of the current block; the constraint further specifies that a first square root of a first quantity is less than or equal to a second quantity, where the first quantity is determined by a first final MV, a second final MV, a third final MV, a fourth final MV, and a width of the current block, and the second quantity is determined by the width and a threshold; and the constraint further specifies that a second square root of a third quantity is less than or equal to a fourth quantity, where the third quantity is determined by a fifth final MV, a sixth final MV, a seventh final MV, an eighth final MV, and a height of the current block, and the fourth quantity is determined by the height and the threshold; the constraint further specifies that a first quantity is less than or equal to a second quantity, where the first quantity is determined by a first width of a transform block, a length of an interpolating filter, and a first height of the transform block, and the second quantity is determined by a threshold, a second width of the current block, and a second height of the current block; and the threshold is specific to uni-prediction or bi-prediction; the constraint further specifies that a quantity is less than or equal to a threshold, where the quantity is directly proportional to a first memory bandwidth and a second memory bandwidth, and the quantity is indirectly proportional to a width of the current block and a height of the current block; the constraint further specifies that a first difference between a first width of a transform block and a second width of the current block is less than or equal to a threshold, and the constraint further specifies that a second difference between a first height of the transform block and a second height of the current block is less than or equal to the threshold; and the processor is further configured to calculate an MVF based on the constrained MVs; perform MCP based on the MVF to generate a prediction block of the current block; and encode an MV index; the processor is further configured to decode an MV index; calculate an MVF based on the constrained MVs; and perform MCP based on the MVF to generate a prediction block of the current block.

In another embodiment, this application includes a method. The method includes: obtaining candidate MVs corresponding to a neighboring block adjacent to a current block in a video frame, generating a candidate list of the candidate MVs, selecting final MVs from the candidate list, and applying a constraint to the final MVs or a transform to obtain constrained MVs.

In still another embodiment, this application includes an apparatus. The apparatus includes a memory; and a processor, which is coupled to the memory and configured to: obtain candidate MVs corresponding to a neighboring block adjacent to a current block in a video frame, generate a candidate list of the candidate MVs, apply a constraint to the candidate MVs or a transform to obtain constrained MVs, and select final MVs from the constrained MVs. In some embodiments, the constraint specifies that a first absolute value of a first difference between a first final MV and a second final MV is less than or equal to a first quantity, and the first quantity is determined by the threshold and a width of the current block; and the constraint further specifies that a second absolute value of a second difference between a third final MV and a fourth final MV is less than or equal to a second quantity, and the second quantity is determined by the threshold and a height of the current block; the constraint further specifies that a first square root of a first quantity is less than or equal to a second quantity, where the first quantity is determined by a first final MV, a second final MV, a third final MV, a fourth final MV, and a width of the current block, and the second quantity is determined by the width and a threshold; and the constraint further specifies that a second square root of a third quantity is less than or equal to a fourth quantity, where the third quantity is determined by a fifth final MV, a sixth final MV, a seventh final MV, an eighth final MV, and a height of the current block, and the fourth quantity is determined by the height and the threshold; the constraint further specifies that a first quantity is less than or equal to a second quantity, where the first quantity is determined by a first width of a transform block, a length of an interpolating filter, and a first height of the transform block, and the second quantity is determined by a threshold, a second width of the current block, and a second height of the current block; the constraint further specifies that a quantity is less than or equal to a threshold, where the quantity is directly proportional to a first memory bandwidth and a second memory bandwidth, and the quantity is indirectly proportional to a width of the current block and a height of the current block; the constraint further specifies that a first difference between a first width of a transform block and a second width of the current block is less than or equal to a threshold, and the constraint further specifies that a second difference between a first height of the transform block and a second height of the current block is less than or equal to the threshold; and the processor is further configured to calculate an MVF based on the constrained MVs; perform MCP based on the MVF to generate a prediction block of the current block; and encode an MV index; the processor is further configured to decode an MV index; calculate an MVF based on the constrained MVs; and perform MCP based on the MVF to generate a prediction block of the current block.

Any of the embodiments above may be combined with any of the other embodiments above to create a new embodiment. These and other features will be more clearly understood from the following detailed description with reference to the accompanying drawings and claims. An embodiment of this application further provides an image processing device. The device includes a processor and a memory. The processor is coupled to the memory, and the processor is configured to enable the apparatus to perform the method in the foregoing aspects or the possible implementations of the foregoing aspects.

An embodiment of this application further provides a chip apparatus, including an input interface, an output interface, at least one processor, and a memory. The input interface, the output interface, the processor, and the memory communicate with each other through an internal connection path. The processor is configured to execute code in the memory. When the processor executes the code, the chip apparatus implements the method in the foregoing aspects or the possible implementations of the foregoing aspects.

This application provides a computer-readable storage medium, configured to store a computer program. The computer program includes instructions used to implement the method in the foregoing aspects or the possible implementations of the foregoing aspects.

This application provides a computer program product. The computer program product includes instructions. When the instructions are run on a computer, the computer is enabled to implement the method in the foregoing aspects or the possible implementations of the foregoing aspects.

## BRIEF DESCRIPTION OF DRAWINGS

For a more complete understanding of this application, reference is now made to the following brief description taken in conjunction with the accompanying drawings and specific implementations, where like reference numerals represent like parts.

FIG. 1 is a schematic diagram of an encoding system;
FIG. 2 is a schematic diagram of MVs of a current block;
FIG. 3 is a schematic diagram of transforming a current block;
FIG. 4 is a flowchart of an encoding method according to an embodiment of this application;
FIG. 5 is a flowchart of a decoding method according to an embodiment of this application;
FIG. 6 is a flowchart of an encoding method according to another embodiment of this application;
FIG. 7 is a flowchart of a decoding method according to another embodiment of this application;
FIG. 8 is a schematic diagram of an apparatus according to an embodiment of this application; and
FIG. 9 is a schematic diagram of transforming a current block.

## DESCRIPTION OF EMBODIMENTS

First, it should be understood that, although illustrative implementations in one or more embodiments are provided below, a disclosed system and/or method can be implemented by means of any quantity of technologies, regardless of whether the technology is currently known or already exists. This application should in no way be limited to the illustrative implementations, drawings, and technologies illustrated below, including example designs and implementations illustrated and described herein, but may be modified within the scope of the appended claims along with their full scope of equivalents.

The following acronyms and abbreviations apply:

AF_inter: affine interpolation (affine inter)
AF_merge: affine merge (affine merge)
ASIC: application-specific integrated circuit (application-specific integrated circuit)
CPU: central processing unit (central processing unit)
CTU: coding tree unit (coding tree unit)
DSP: digital signal processor (digital signal processor)
EO: electrical-to-optical (electrical-to-optical)
FPGA: field-programmable gate array (field-programmable gate array)
ITU: International Telecommunication Union (International Telecommunication Union)
ITU-T: ITU Telecommunication Standardization Sector (ITU Telecommunication Standardization Sector)
LCD: liquid crystal display (liquid crystal display)
MB: memory bandwidth (memory bandwidth)
MCP: motion compensation prediction (motion compensation prediction)
MV: motion vector (motion vector)
MVF: motion vector field (motion vector)
NB: neighboring block (neighboring block)
OE: optical-to-electrical (optical-to-electrical)
PPS: picture parameter set (picture parameter set)
RAM: random-access memory (random-access memory)
RF: radio frequency (radio frequency)
ROM: read-only memory (read-only memory)
RX: receiver unit (receiver unit)
SPS: sequence parameter set (sequence parameter set)
SRAM: static RAM (static RAM)
TCAM: ternary content-addressable memory (ternary content-addressable memory)
TH: threshold (threshold)
TX: transmitter unit (transmitter unit)

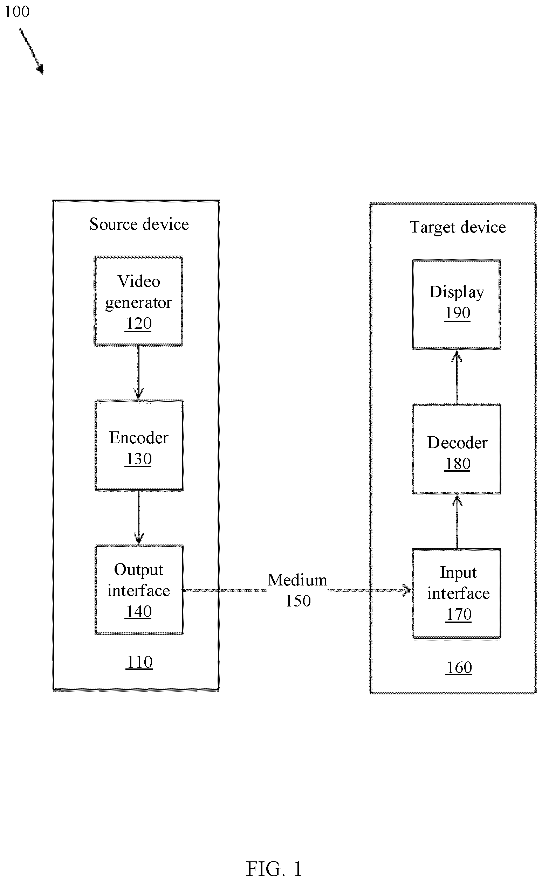

FIG. 1 is a schematic diagram of a coding system 100. The coding system 100 includes a source device 110, a medium 150, and a target device 160. The source device 110 and the target device 160 each are a mobile phone, a tablet computer, a desktop computer, a notebook computer, or another suitable device. The medium 150 is a local network, a wireless network, the Internet, or another suitable medium.

The source device 110 includes a video generator 120, an encoder 130, and an output interface 140. The video generator 120 is a camera or another device suitable for generating a video. The encoder 130 may be referred to as a codec. The encoder performs encoding according to a set of rules described in "High Efficiency Video Coding (High Efficiency Video Coding)" in ITU-T H.265 ("H.265") released in December 2016, and the like. These rules are incorporated by reference. The output interface 140 is an antenna or another component suitable for transmitting data to the target device 160. Alternatively, the video generator 120, the encoder 130, and the output interface 140 may be in any suitable combination of the device.

The target device 160 includes an input interface 170, a decoder 180, and a display 190. The input interface 170 is an antenna or another component suitable for receiving data from the source device 110. The decoder 180 may also be referred to as a codec. The decoder 180 performs decoding according to a set of rules described in H.265 and the like. The display 190 is an LCD screen or another component suitable for displaying a video. Alternatively, the input interface 170, the decoder 180, and the display 190 may be in any suitable combination of the device.

During operations, in the source device 110, the video generator 120 captures a video, the encoder 130 encodes the video to create an encoded video, and the output interface 140 transmits the encoded video over the medium 150 to the target device 160. The source device 110 locally stores the video or the encoded video, or the source device 110 indicates to store the video or the encoded video on another device. The encoded video includes data defined at different levels such as fragments and blocks. A fragment is a region that is apparently different in space in a video frame, and the encoder 130 encodes the region separately from any other region in the video frame. A block is a group of pixels arranged in a rectangle, for example, a square of 8 pixels × 8 pixels. A block is also referred to as a unit or a coding unit. Other levels include regions, CTUs, and tiles. In the target device 160, the input interface 170 receives an encoded video from the source device 110, the decoder 180 decodes the encoded video to obtain a decoded video, and the display 190 displays the decoded video. The decoder 180 may decode the encoded video in a manner reverse to that used by the encoder 130 for encoding the video. The target device 160 locally stores the encoded video or the decoded video, or the target device 160 indicates to store the encoded video or the decoded video on another device.

Encoding and decoding are collectively referred to as coding. Coding is divided into intra-frame coding and interframe coding, which are also referred to as intra prediction and inter prediction, respectively. Intra prediction implements spatial prediction to reduce spatial redundancy within a video frame. Inter prediction implements temporal prediction to reduce temporal redundancy between successive video frames. MCP is one of inter prediction types.

In October 2015, Huawei Technologies Co., Ltd. proposed "affine transform prediction for next-generation video coding (Affine transform prediction for next generation video coding)", which is incorporated by reference and describes two MCP coding modes for simulating affine transform: AF_inter and AF_merge. In this case, affine transform is a manner of transforming a first video block or another unit into a second video block or another unit while maintaining linearity and parallelism to some extent. Therefore, AF_inter and AF_merge simulate translation, rotation, scaling, shear mapping, and other features. However, both AF_inter and AF_merge increase a memory bandwidth required. The memory bandwidth is a rate at which data is read from or stored in a memory, usually in a unit of byte/second. In this case, the memory bandwidth is a rate at which samples are read from a memory in an MCP coding process. Because AF_inter and AF_merge increase the memory bandwidth required, the memory bandwidth needs to be reduced.

This application discloses embodiments of an MV constraint and a transform constraint in video coding. These embodiments constrain an MV or a transform to reduce a size of a memory bandwidth required to perform AF_inter and AF_merge. These embodiments are applicable to a transform with two, three, four, or more control points. A threshold is used by an encoder and a decoder to implement the constraints. The encoder and the decoder store the threshold as a static default value, or the encoder dynamically indicates the threshold to the decoder by using an SPS, a PPS, a fragment header, or another appropriate form.

For a bitstream compliant with a standard, if the AF_inter or AF_merge mode is selected for a coding block, a motion vector of a control point of the coding block needs to meet a specified constraint condition; or otherwise, the bitstream does not comply with the standard.

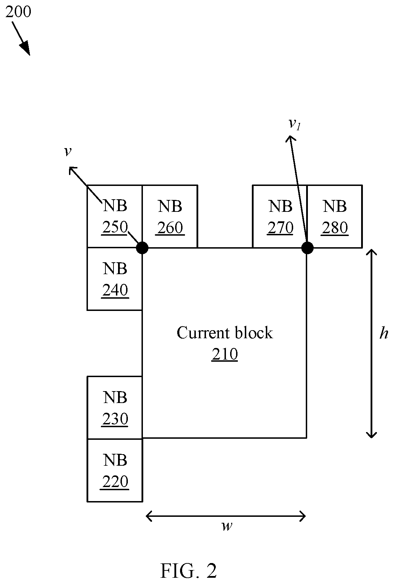

FIG. 2 is a schematic diagram 200 of MVs of a current block. The schematic diagram 200 includes a current block 210, an NB 220, an NB 230, an NB 240, an NB 250, an NB 260, an NB 270, and an NB 280. The current block 210 is referred to as a current block because the encoder 130 is currently encoding it. The current block 210 includes a width w, a height $h$, and an upper left control point and an upper right control point that are represented by black dots. For example, w and A each are eight pixels. The upper left control point has an MV $v_0$, which is represented as ($v_{0x}$, $v_{0y}$), where $v_{0x}$ is a horizontal component of $v_0$, and $v_{0y}$ is a vertical component of $v_0$. The upper right control point has an MV $v_1$, which is represented as ($v_{1x}$, $v_{1y}$), where $v_{1x}$ is a horizontal component of $v_1$, and $v_{1y}$ is a vertical component of $v_1$. The current block 210 may include another control point, such as a control point located at a center of the current block 210. The NB 220 to the NB 280 are referred to as NBs because they are adjacent to the current block 210.

For an affine model with two control points and four parameters, an MVF of the current block 210 is represented as follows:

$$v_x = \frac{v_{1x} - v_{0x}}{w}x - \frac{v_{1y} - v_{0y}}{w}y + v_{0x}$$

$$v_y = \frac{v_{1y} - v_{0y}}{w}x + \frac{v_{1x} - v_{0x}}{w}y + v_{0y}.$$

$$(1)$$

$v_x$ is a horizontal component of one MV of the entire current block 210; $v_{1x}$, $v_{0x}$, w, $v_{1y}$, and $v_{0y}$ are described above; x is a horizontal position measured from the center of the current block 210; y is a vertical position measured from the center of the current block 210; and $v_y$ is a vertical component of the one MV of the entire current block 210. For an affine model with three control points and six parameters, an MVF of the current block 210 is represented as follows:

$$v_x = \frac{v_{1x} - v_{0x}}{w}x + \frac{v_{2x} - v_{0x}}{h}y + v_{0x}$$

$$v_y = \frac{v_{1y} - v_{0y}}{w}x + \frac{v_{2y} - v_{0y}}{h}y + v_{0y}.$$

$$(2)$$

$v_x$, $v_{1x}$, $v_{0x}$, w, x, h, y, $v_y$, $v_{1y}$, and $v_{0y}$ are described above; $v_{2x}$ is a horizontal component of an MV of a lower left control point; and $v_{2y}$ is a vertical component of the MV of the lower left control point. For an affine model with four control points and eight parameters, an MVF of the current block 210 is represented as follows:

$$v_x = \frac{v_{1x} - v_{0x}}{w}x + \frac{v_{2x} - v_{0x}}{h}y + \frac{v_{3x} + v_{0x} - v_{1x} - v_{2x}}{wh}y + v_{0x}$$

$$v_y = \frac{v_{1y} - v_{0y}}{w}x + \frac{v_{2y} - v_{0y}}{h}y + \frac{v_{3y} + v_{0y} - v_{1y} - v_{2y}}{wh}y + v_{0y}.$$

$$(3)$$

$v_x$, $v_{1x}$, $v_{0x}$, $w$, $x$, $v_{2x}$, $h$, $y$, $v_x$, $v_{1y}$, $v_{0y}$, and $v_{2y}$ are described above; $v_{3x}$ is a horizontal component of an MV of a lower right control point; and $v_{3y}$ is a vertical component of the MV of the lower right control point.

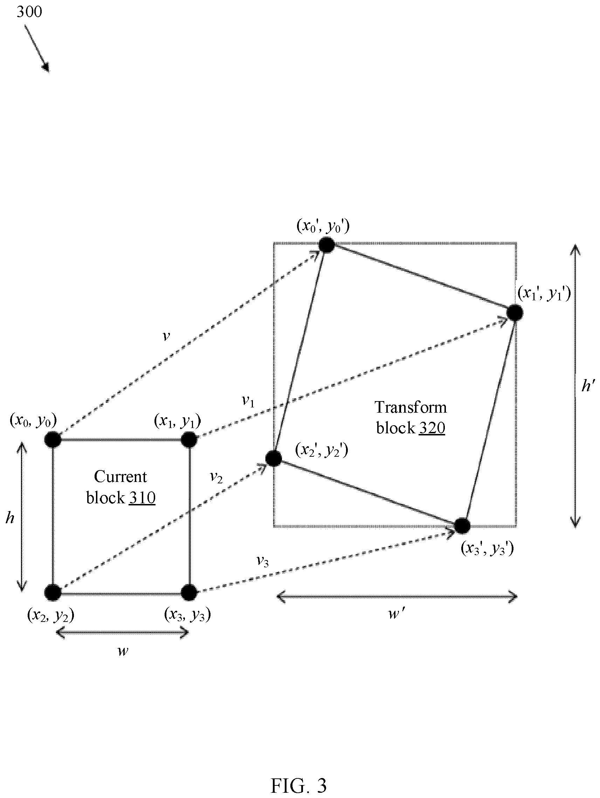

FIG. 3 is a schematic diagram 300 of transforming a current block. The schematic diagram 300 includes a current block 310 and a transform block 320. The current block 310 is located in a current video frame, while the transform block 320 is the current block 310 that has been transformed in a video frame immediately following the current video frame. As shown in the figure, to transform from the current block 310 to the transform block 320, the current block 310 is rotated and scaled simultaneously.

In the current block 310, positions of an upper left control point, an upper right control point, a lower left control point, and a lower right control point in the current block 310 are respectively represented as a coordinate set of $(x_0, y_0)$, $(x_1, y_1)$, $(x_2, y_2)$, and $(x_3, y_3)$, where w is a width, and $h$ is a height. In the transform block 320, positions of an upper left control point, an upper right control point, a lower left control point, and a lower right control point in the transform block 320 are respectively represented as a coordinate set of $(x_0', y_0')$, $(x_1', y_1')$, $(x_2', y_2')$, and $(x_3', y_3')$, where $w'$ is a width, and $h'$ is a height. A motion vector v is represented as a coordinate set $(v_0, v_1, v_2, v_3)$, and describes a motion from the current block 310 to the transform block 320. Therefore, the control points of the transform block 320 may be represented by using the motion vector v and the control points of the current block 310 as follows:

$$(x_0', y_0') = (x_0 + vx_0, y_0 + vy_0)$$

$$(x_1', y_1') = (x_1 + vx_1, y_1 + vy_1)$$

$$(x_2', y_2') = (x_2 + vx_2, y_2 + vy_2)$$

$$(x_3', y_3') = (x_3 + vx_3, y_3 + vy_3)$$

$$(4)$$

A size of the transform block 320 may be represented as follows:

$$w' = \max(x_0', x_1', x_2', x_3') - \min(x_0', x_1', x_2', x_3') + 1$$

$$h' = \max(y_0', y_1', y_2', y_3') - \min(y_0', y_1', y_2', y_3') + 1$$

$$(5)$$

The max() function selects a maximum value from its operands, and the min() function selects a minimum value from its operands. As the positions of the control points of the current block 310 are known, v describes the positions of the control points of the transform block 320. If v is a fraction, v points to a subsample position that does not exist in a reference frame. In this case, the encoder 130 generates a subsample position by using an interpolating filter that uses an integer sample as an input. T' is a length of the interpolating filter in an affine mode, and is equal to a quantity of integer samples. For example, $T'$ is 2, 4, or 8. Finally, a memory bandwidth MB required for encoding the current block 310 may be represented as follows:

$$MB = (w' + T' - 1) * (h' + T' - 1)$$

$$(6)$$

$w'$, $T'$, and $h'$ are described above.

Specially, if the current block 310 is a four-parameter affine coding block and control points of the current block 310 are the upper left control point and the upper right control point, or is a six-parameter affine coding block and control points of the current block 310 are the upper left control point, the upper right control point, and the lower left control point, the memory bandwidth MB required for encoding the current block 310 is obtained through calculation in the following manner:

(a) Variables dHorX, dVerX, dHorY, and dVerY are calculated:

$$\text{dHorX} = (vx_1 - vx_0) << (7 - \text{Log(w)}) \tag{7}$$

$$\text{dHorY} = (vy_1 - vy_0) << (7 - \text{Log(w)}) \tag{8}$$

If the current block 310 is a six-parameter affine coding block:

$$\text{dVerX} = (vx_2 - vx_0) << (7 - \text{Log(h)}) \tag{9}$$

$$\text{dVerY} = (vy_2 - vy_0) << (7 - \text{Log(h)}) \tag{10}$$

Otherwise:

$$\text{dVerX} = X\ \text{dHorY} \tag{11}$$

$$\text{dVerY} = \text{dHorX} \tag{12}$$

(b) If the current block 310 is a four-parameter affine coding block, motion vectors of vxz and $vy_2$ of the lower left control point are calculated:

$$vx_2 = \text{Clip3}(-131072, 131071, \text{Rounding}((vx_0 << 7) + \text{dVerX*h}, 7)) \tag{13}$$

$$vy_2 = \text{Clip3}(-131072, 131071, \text{Rounding}((vy_0 << 7) + \text{dVerY*h}, 7)) \tag{14}$$

(c) Motion vectors of $vx_3$ and $vy_3$ of the lower right control point are calculated:

$$vx_3 = \text{Clip3}(-131072, 131071, \text{Rounding}((vx_0 << 7) + \text{dHorX} * w + \text{dVerX*h}, 7)) \tag{15}$$

$$vx_3 = \text{Clip3}(-131072, 131071, \text{Rounding}((vy_0 << 7) + \text{dHorY} * w + \text{dVerY*h}, 7)) \tag{16}$$

(d) The following variables are calculated:

$$\text{max\_x} = \max((vx_0 >> 4), \max((vx_1 >> 4) + w, \max((vx_2 >> 4), (vx_3 >> 4) + w))) \tag{17}$$

$$\text{min\_x} = \min((vx_0 >> 4), \min((vx_1 > 4) + w, \min((vx_2 >> 4), (vx_3 >> 4) + w))) \tag{18}$$

$$\text{max\_y} = \max((vy_0 >> 4), \max((vy_1 >> 4), \max((vy_2 >> 4) + h, (vy_3 >> 4) + h))) \tag{19}$$

$$\text{min\_y} = \min((vy_0 >> 4), \min((vy_1 >> 4), \min((vy_2 >> 4) + h, (vy_3 >> 4) + h))) \tag{20}$$

(e) The size of the transform block is calculated:

$$w' = \max\_x - \min\_x \qquad (21)$$

$$h' = \max\_y - \min\_y \qquad (22)$$

(f) The *MB* is calculated:

$$MB = (w' + T' - 1) * (h' + T' - 1) \qquad (23)$$

In the preceding formulas, a definition of Clip3 is as follows:

$$\text{Clip3}(i, j, x) = \begin{cases} i & ; & x < i \\ j & ; & x > j \\ x & ; & \text{Others} \end{cases} \qquad (24)$$

This definition indicates that an input operand $x$ is constrained within an interval [i, j].
A definition of Log(x) is as follows:

$$\text{Log}(x) = \log_2 x \qquad (25)$$

This definition indicates that a logarithm of the input operand $x$ to a base 2 is calculated.
A definition of Rounding is as follows:

$$\text{Rounding}(x, s) = \begin{cases} \text{Sign}(x) \times ((\text{Abs}(x) + (1 << (s-1))) >> s) & s \geq 1 \\ x & s = 0 \end{cases} \qquad (26)$$

This definition indicates that rounding is performed on the input $x$ based on a right-shifted number s.

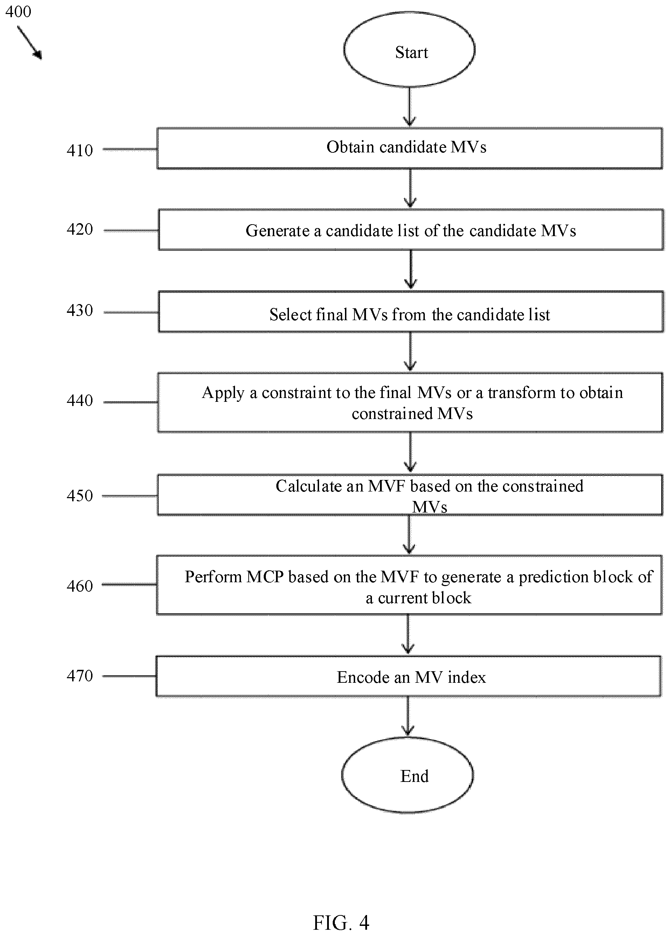

FIG. 4 is a flowchart of an encoding method 400 according to an embodiment of this application. The encoder 130 may perform the method 400 when performing AF_inter or AF_merge. At step 410, obtain candidate MVs. During inter prediction, the encoder 130 obtains the candidate MVs from MVs of the NB 220 to the NB 280. The MVs of the NB 220 to the NB 280 are already known when the encoder 130 encodes the current block 210. Specifically, for AF_inter, the encoder 130 considers the MVs of the NB 250, the NB 260, and the NB 240 as candidate MVs of $v_0$ in this sequence, and the encoder 130 considers the MVs of the NB 270 and the NB 280 as candidate MVs of $v_1$ in this sequence. For AF_merge, the encoder 130 considers the MVs of the NB 230, the NB 270, the NB 280, the NB 220, and the NB 250 as candidate MVs of $v_0$ and $v_1$ in this sequence.
At step 420, generate a candidate list of the candidate MVs. To this end, the encoder 130 uses a known rule. For example, the encoder 130 removes a duplicate candidate MV, and fills an unused empty entry in the candidate list with a zero MV
At step 430, select final MVs from the candidate list. The encoder 130 selects final MVs for $v_0$ and $v_1$ in an affine model with two control points and four parameters; selects final MVs for $v_0$, $v_1$, and $v_2$ in an affine model with three control points and six parameters; or selects final MVs for $v_0$, $v_1$, $v_2$, and $v_3$ in an affine model with four control points and eight parameters. To this end, the encoder 130 uses a known rule. For example, the encoder uses a rate distortion cost check. For AF_inter, the encoder 130 may further perform motion estimation to obtain the final MVs.
At step 440, determine whether the final MVs meet a constraint condition. The encoder 130 directly constrains the final MVs by using an MV constraint described below, or the encoder 130 constrains a transform by using a transform constraint described below, thereby indirectly constraining the final MVs. By applying the constraint, the encoder 130 calculates a combination of $v_{0x}$, $v_{0y}$, $v_{1x}$, $v_{1y}$, $v_{2x}$, $v_{2y}$, $v_{3x}$, and $v_{3y}$ based on an affine model used by the encoder 130 when constraining the final MVs, or the encoder 130 calculates $w'$, $h'$, and $T$ when constraining the transform. Compared with the final MVs, the constrained MVs reduce a required memory bandwidth. If the encoder 130 cannot constrain the final MVs, the encoder 130 may use one of two alternative solutions. In a first alternative solution, the encoder 130 skips remaining steps of the method 400 to implement an encoding mode other than AF_inter or AF_merge. In a second alternative solution, the encoder 130 modifies the final MVs, until the encoder 130 can obtain final MVs that meet the constraint. Alternatively, steps 410, 420, 430 may be replaced with a single step of determining the MVs, and step 440 may be replaced with a step of applying a constraint to the MVs or a transform to obtain the constrained MVs.

At step 450, calculate an MVF based on the MVs that meet the constraint. The encoder 130 calculates the MVF according to the formula set (1), (2), or (3). At step 460, perform MCP based on the MVF to generate a prediction block of the current block. The prediction block includes a predicted value of each pixel in the current block 210.

Finally, in step 470, encode an MV index. The encoder 130 encodes the MV index as a part of the encoded video described above. The MV index indicates a sequence of the candidate MVs in the candidate list. For AF_inter, the encoder 130 may further encode an MV difference, and the MV difference indicates a difference between a final MV and a candidate MV

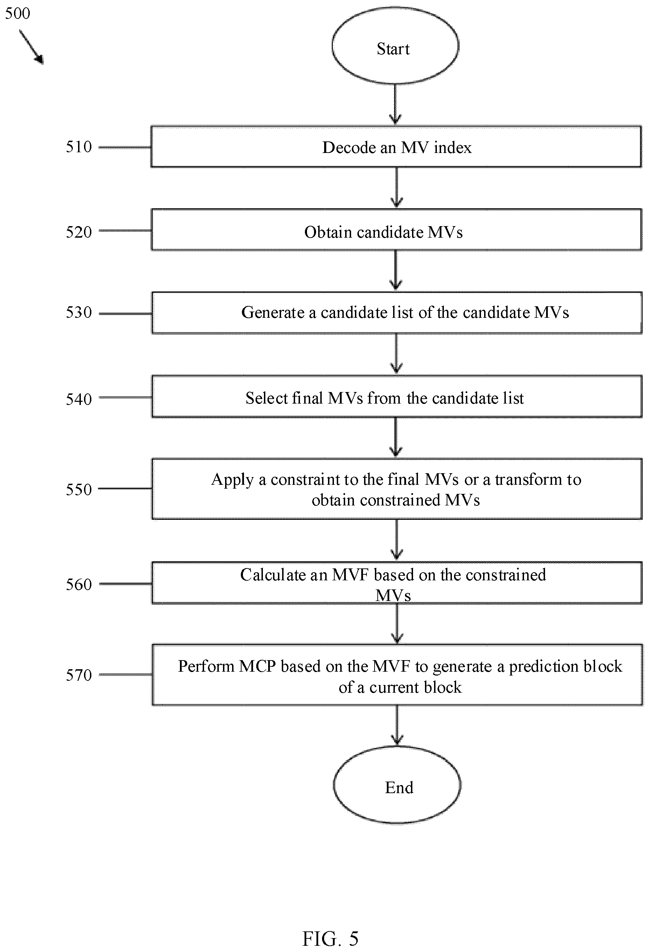

FIG. 5 is a flowchart of a decoding method 500 according to an embodiment of this application. The decoder 180 may perform the method 500 when performing AF_inter or AF_merge. At step 510, an MV index is decoded. The MV index may be the same index encoded at step 470 in FIG. 4. For AF_inter, the encoder 130 may further decode an MV difference. Step 520, step 530, step 540, step 550, step 560, and step 570 are respectively similar to step 410, step 420, step 430, step 440, step 450, and step 460 in FIG. 4. For AF_inter, the encoder 130 may obtain final MVs, and add the MV difference to candidate MVs. Alternatively, step 520, step 530, and step 540 may be replaced with a single step of determining the MVs, and step 550 may be replaced with a step of applying a constraint to the MVs or a transform to obtain constrained MVs.

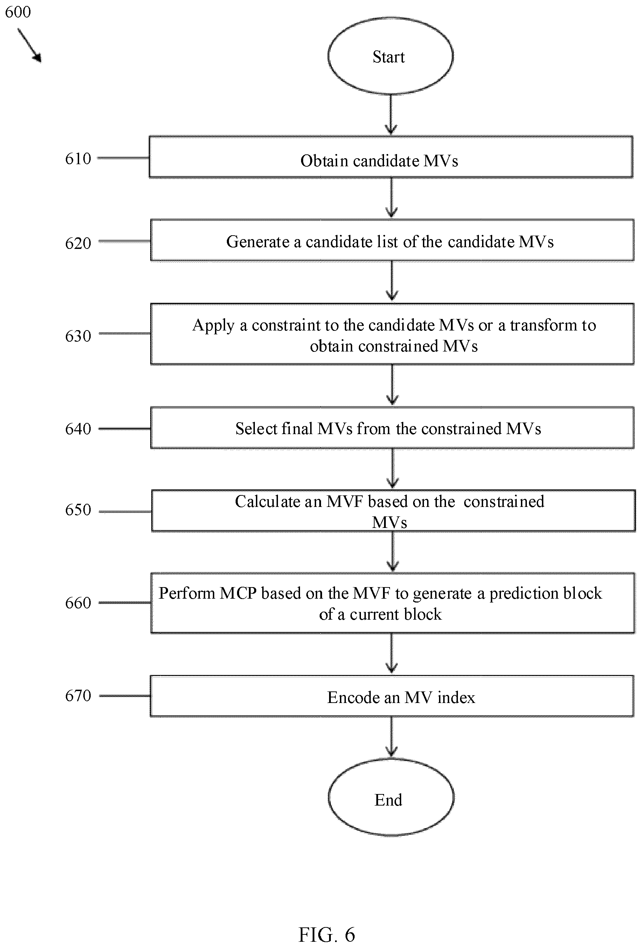

FIG. 6 is a flowchart of an encoding method 600 according to another embodiment of this application. The encoder 130 may perform the method 600 when performing AF_merge. The method 600 is similar to the method 400 in FIG. 4. Specifically, step 610, step 620, step 650, step 660, and step 670 in FIG. 6 are respectively similar to step 410, step 420, step 450, step 460, and step 470 in FIG. 4. However, compared with step 430 and step 440, step 630 and step 640 are reversed. In addition, unlike the method 400 applicable to both AF-inter and AF-merge, the method 600 is applicable to AF-merge.

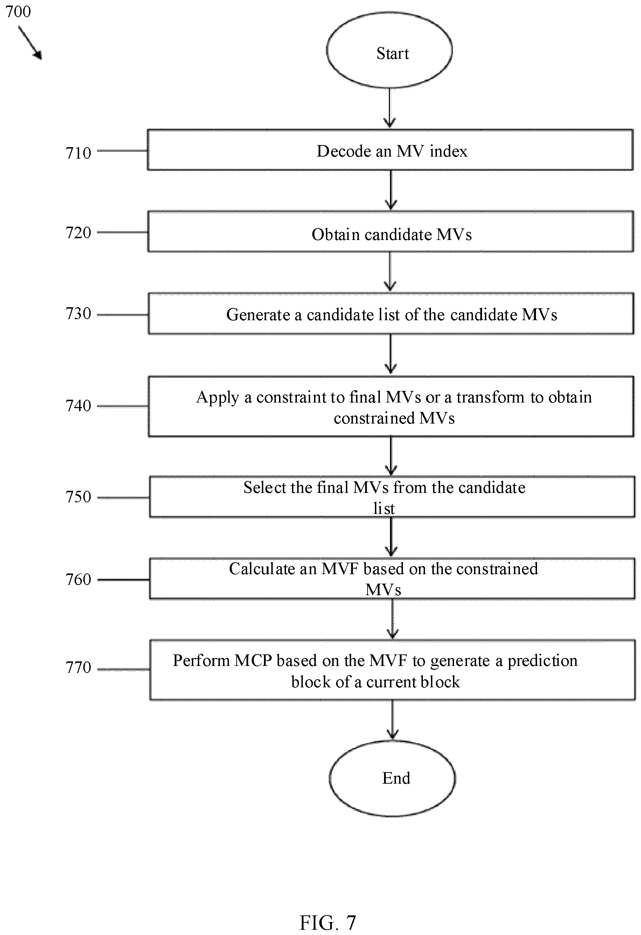

FIG. 7 is a flowchart of a decoding method 700 according to another embodiment of this application. The decoder 180 may perform the method 700 when performing AF_merge merge. At step 710, an MV index is decoded. The MV index may be the same index encoded at step 670 in FIG. 6. Step 720, step 730, step 740, step 750, step 760, and step 770 are respectively similar to step 610, step 620, step 630, step 640, step 650, and step 660 in FIG. 6. MV Constraint

In a first embodiment of an MV constraint, the encoder 130 uses two control points to apply the following MV constraint to initial MVs:

$$|v_{1x} - v_{0x}| \le w * TH$$
$$|v_{1y} - v_{0y}| \le h * TH \tag{27}$$

$v_{1x}$, $v_{0x}$, $w$, $v_{1y}$, and $v_{0y}$ are described above; $TH$ is a threshold; and h is a height of the current block 210, in a unit of pixel quantity, for example, eight pixels. $TH$ is a random number suitable for providing sufficient MCP and also for reducing a required memory bandwidth. For example, if the current block 310 is transformed into the transform block 320 only by using a scaling transform, and if a maximum scaling factor is 2, then $|v_{1x} - v_{0x}| + w$, namely, a width of the transform block 320, should not be greater than 2*$w$, and $TH$ should be set to 1. The encoder 130 and the decoder 180 store $TH$ as a static default value. Alternatively, the encoder 130 dynamically indicates $TH$ to the decoder 180 by using an SPS, a PPS, a fragment header, or another appropriate form.

In a second embodiment of an MV constraint, the encoder 130 uses three control points to apply the following MV constraint to initial MVs:

$$|v_{1x} - v_{0x}| \le w * TH$$
$$|v_{1y} - v_{0y}| \le h * TH$$
$$|v_{2x} - v_{0x}| \le w * TH$$
$$|v_{2y} - v_{0y}| \le h * TH \tag{28}$$

$v_{1x}$, $v_{0x}$, $w$, $TH$, $v_{1y}$, $v_{0y}$, and $A$ are described above; $v_{2x}$ is a horizontal component of an MV of a third control point; and $v_{2y}$ is a vertical component of the MV of the third control point. The third control point is located at any suitable position of the current block 210, for example, at a center of the current block 210.

In a third embodiment of an MV constraint, the encoder 130 uses two control points to apply the following MV constraint to initial MVs:

$$\sqrt{(|v_{1x} - v_{0x}| + w)^2 + |v_{1y} - v_{0y}|^2} \leq w * TH.$$

$$\sqrt{(|v_{1x} - v_{0x}| + w)^2 + |v_{1y} - v_{0y}|^2} \leq w * TH.$$

$$(29)$$

$v_{1x}, v_{0x}, w, v_{1y}, v_{0y},$ and $TH$ are described above.

In a fourth embodiment of an MV constraint, the encoder 130 uses three control points to apply the following MV constraint to initial MVs:

$$\sqrt{(|v_{1x} - v_{0x}| + w)^2 + |v_{1y} - v_{0y}|^2} \leq w * TH$$

$$\sqrt{(|v_{2y} - v_{0y}| + h)^2 + |v_{2x} - v_{0x}|^2} \leq h * TH.$$

$$(30)$$

$v_{1x}, v_{0x}, w, v_{1y}, v_{0y}, TH, v_{2y}, h,$ and $v_{2x}$ are described above.

Transform Constraint

In a first embodiment of a transform constraint, the encoder 130 applies the following transform constraint:

$$(w' + T' - 1) * (h' + T' - 1) \leq TH * w * h \qquad (31)$$

$w', T', h', w,$ and $h$ are described above. $TH$ is a random number suitable for providing sufficient MCP and also for reducing a required memory bandwidth. For example, if a maximum memory bandwidth for a sample is defined as memory access consumption of one $4 \times 4$ block, then $TH$ is as follows:

$$TH = \frac{(4 + T - 1) * (4 + T - 1)}{4 * 4}. \qquad (32)$$

$T$ is a length of an interpolating filter in a translational mode. The encoder 130 and the decoder 180 store $TH$ as a static default value, or the encoder 130 dynamically indicates $TH$ to the decoder 180 by using an SPS, a PPS, a fragment header, or another appropriate form.

In a second embodiment of a transform constraint, the encoder 130 applies the following transform constraint when using uni-prediction:

$$(w' + T' - 1) * (h' + T' - 1) \leq TH_{UNI} * w * h \qquad (33)$$

The uni-prediction means that the encoder 130 uses one reference block to determine a predicted value of the current block 210. $w', T', h', w,$ and $h$ are described above. $TH_{UNI}$ is a random number suitable for providing sufficient MCP and also for reducing a required memory bandwidth for the uni-prediction. For example, if a maximum memory bandwidth for a sample in the uni-prediction is defined as memory access consumption of one $4 \times 4$ block, then $TH_{UNI}$ is as follows:

$$TH_{UNI} = \frac{(4+T-1)*(4+T-1)}{4*4}.$$

(34)

Similarly, the encoder 130 applies the following transform constraint when using bi-prediction:

$$(w' + T' - 1) * (h' + T' - 1) \leq TH_{BI} * w * h$$

(35)

The bi-prediction means that the encoder 130 uses two reference blocks to determine a predicted value of the current block 210. $w'$, $T'$, $h'$, $w$, and $A$ are described above. $TH_{BI}$ is a random number suitable for providing sufficient MCP and also for reducing a required memory bandwidth for the bi-prediction. $TH_{UNI}$ is less than or equal to $TH_{BI}$. For example, if a maximum memory bandwidth for a sample in the bi-prediction is defined as memory access consumption of one $8\times4$ block, then $TH_{BI}$ is as follows:

$$TH_{BI} = \frac{(8+T-1)*(4+T-1)}{8*4}.$$

(36)

Unlike the formula (11), the thresholds in the formulas (13) and (15) are for the uni-prediction and the bi-prediction, respectively.

In a third embodiment of a transform constraint, the encoder 130 uses bi-prediction, and therefore there are two memory bandwidths as follows:

$$MB_0 = (w_0' + T' - 1) * (h_0' + T' - 1)$$
$$MB_1 = (w_1' + T' - 1) * (h_1' + T' - 1)$$

(37)

$MB_0$ is a memory bandwidth for performing a first transform by using a first width $w_0'$ and a first height $h_0'$, and $MB_1$ is a memory bandwidth for performing a second transform by using a second width $w_1'$ and a second height $h_1'$. The encoder 130 uses the two memory bandwidths to apply the following transform constraint:

$$\frac{MB_0+MB_1}{w*h} \leq TH.$$

(38)

$MB_0$, $MB_1$, $w$, $h$, and $TH$ are described above.

In a fourth embodiment of a transform constraint, the encoder 130 applies the following transform constraint:

$$w' - w \leq TH$$
$$h' - h \leq TH$$

(39)

$w'$, w, $h'$, $h$, and $TH$ are described above.

In a fifth embodiment of a transform constraint, the encoder 130 determines a position of a transform block 420 as follows:

$$(x_0', y_0') = (x_0 + vx_0, y_0 + vy_0)$$
$$(x_1', y_1') = (x_0 + w + vx_1, y_0 + vy_1)$$
$$(x_2', y_2') = (x_0 + vx_2, y_0 + h + vy_2)$$
$$(x_3', y_3') = (x_0 + w + vx_3, y_0 + h + vy_3)$$

(40)

$x_0'$, $y_0'$, $x_0$, $v$, $y_0$, $x_1'$, $y_1'$, $w$, $x_1$, $y_1$, $x_2'$, $y_2'$, $x_2$, $h$, $y_2$, $x_3'$, $y_3'$, $x_3$, and $y_3$ are described above. The encoder 130 uses the formula set (17) and the formula set (7) to determine $w'$ and $h'$.

In a sixth embodiment of a transform constraint, the encoder 130 applies the following transform constraint:

$$(w' + T' - 1) * (h' + T' - 1) \leq (w + T - 1 + w/ext) * (h + T - 1 + h/ext) \tag{41}$$

$w'$, $T'$, $h'$, w, and A are described above. T is a length of an interpolating filter in a translational mode. ext is a ratio of a quantity of pixels that can be extended, and may be 1, 2, 4, 8, 16, or the like.

In a seventh embodiment of a transform constraint, the encoder 130 applies the following transform constraint:

$$(w' + T' - 1) \leq (w + T - 1 + w/ext) \tag{42}$$

$$(h' + T' - 1) \leq (h + T - 1 + h/ext) \tag{43}$$

$w'$, $T'$, $h'$, w, and h are described above. T is a length of an interpolating filter in a translational mode. ext is a ratio of a quantity of pixels that can be extended, and may be 1, 2, 4, 8, 16, or the like.

In an eighth embodiment of a transform constraint, an unconstrained candidate MV is discarded. The unconstrained candidate MV refers to a candidate MV that is not subject to the foregoing or other constraints. Therefore, the unconstrained candidate MV is a candidate MV that is retained in its original form.

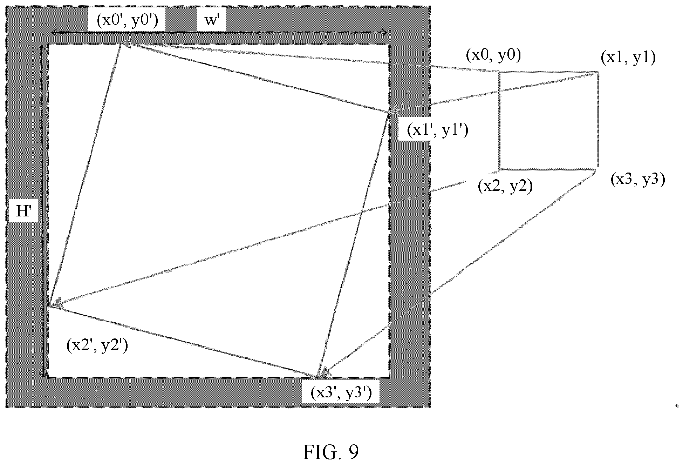

In an embodiment, as shown in FIG. 9, motion vectors of four vertices of an affine coding block may be calculated based on motion vectors of affine control points, to calculate a quantity of reference pixels of the entire affine coding block. If the quantity exceeds a specified threshold, it is considered that the motion vectors of the control points are invalid.

The threshold is set to (width + 7 + width/4) * (height + 7 + height/4). In other words, relative to translational motion compensation, width/4 pixels and height/4 pixels can be extended in a horizontal direction and a vertical direction, respectively.

A specific calculation manner is as follows:

(1) First, motion vectors of a lower left corner (mv2) and a lower right corner (mv3) of a current CU are obtained through calculation based on a motion vector (mv0, mv1) or (mv0, mv1, mv2) of a control point of the current CU.

If mvAffine has two motion vectors, mv2 is calculated by using the following formulas:

mv2_x = Clip3(-131072, 131071, Rounding((mv0_x << 7) + dVerX*height, 7))
mv2_y = Clip3(-131072, 131071, Rounding((mv0_y << 7) + dVerY*height, 7))

mv3 is calculated by using the following formulas:

mv3_x = Clip3(-131072, 131071, Rounding((mv0_x << 7) + dHorX*width + dVerX*height, 7))
mv3_y = Clip3(-131072, 131071, Rounding((mv0_y << 7) + dHorY*width + dVerY*height, 7))

(2) Then, a rectangular region range formed by position coordinates of the current CU in a reference frame is obtained through calculation based on the motion vectors of the four vertices.

max_x = max((mv0_x >> 4), max((mv1_x >> 4) + width, max((mv2_x >> 4), (mv3_x >> 4) + width)))
min_x = min((mv0_x >> 4), min((mv1_x >> 4) + width, min((mv2_x >> 4), (mv3_x >> 4) + width)))
max_y = max((mv0_y >> 4), max((mv1_y >> 4), max((mv2_y >> 4) + height, (mv3_x >> 4) + height)))
min_y = min((mv0_y >> 4), min((mv1_y >> 4), min((mv2_y >> 4) + height, (mv3_x >> 4) + height)))

The motion vectors are right-shifted by 4 because precision of the motion vectors is 1/16.

(3) Then, the quantity of reference pixels can be calculated, where 7 is a quantity of extended pixels required for sub-pixel interpolation.

$$memory\_access = (max\_x - min\_x + 7) * (max\_y - min\_y + 7)$$

(4) If memory_access is greater than (width + 7 + width/4) * (height + 7 + height/4), a bitstream is invalid.

In an example, the following bitstream restriction is added to description about derivation of a motion vector array for subblocks of an affine motion unit in section 9.20:

**9.20 Derivation of a Motion Vector Array for Subblocks of an Affine Motion Unit**

If there are three motion vectors in a motion vector set of affine control points, the motion vector set is represented as mvsAffine (mv0, mv1, mv2); or otherwise (there are two motion vectors in a motion vector set of affine control points), the motion vector set is represented as mvsAffine (mv0, mv1).
(a) Variables dHorX, dVerX, dHorY, and dVerY are calculated:

$$dHorX = (mv1\_x - mv0\_x) << (7 - Log(width))$$
$$dHorY = (mv1\_y - mv0\_y) << (7 - Log(width))$$

If mvsAffine has three motion vectors, then:

$$dVerX = (mv2\_x - mv0\_x) << (7 - Log(height))$$
$$dVerY = (mv2\_y - mv0\_y) << (7 - Log(height))$$

Otherwise (mvsAffine has two motion vectors):

$$dVerX = -dHorY$$
$$dVerY = dHorX$$

(xE, yE) is a position of an upper-left-corner sample of a luminance prediction block of a current prediction unit in a luminance sample matrix of a current image, a width and a height of the current prediction unit are respectively width and height, and a width and a height of each subblock are respectively subwidth and subheight. In the luminance prediction block of the current prediction unit, a subblock in which the upper-left-corner sample is located is A, a subblock in which an upper-right-corner sample is located is B, and a subblock in which a lower-left-corner sample is located is C.
A bitstream compliant with this standard needs to meet the following condition:

$$memory\_access <= (width + 7 + width/4) * (height + 7 + height/4)$$

memory_access is obtained through calculation in the following manner:
If mvAffine has two motion vectors, mv2 is calculated by using the following formulas:

$$mv2\_x = Clip3(-131072, 131071, Rounding((mv0\_x << 7) + dVerX*height, 7))$$
$$mv2\_y = Clip3(-131072, 131071, Rounding((mv0\_y << 7) + dVerY*height, 7))$$

mv3 is calculated by using the following formulas:

$$mv3\_x = Clip3(-131072, 131071, Rounding((mv0\_x << 7) + dHorX*width + dVerX*height, 7))$$

$$mv3\_y = Clip3(-131072, 131071, Rounding((mv0\_y << 7) + dHorY*width + dVerY*height, 7))$$

Then, the following variables are calculated:

$$max\_x = max((mv0\_x >> 4), max((mv1\_x >> 4) + width, max((mv2\_x >> 4), (mv3\_x >> 4) + width)))$$

$$min\_x = min((mv0\_x >> 4), min((mv1\_x >> 4) + width, min((mv2\_x >> 4), (mv3\_x >> 4) + width)))$$

$$max\_y = max((mv0\_y >> 4), max((mv1\_y >> 4), max((mv2\_y >> 4) + height, (mv3\_x >> 4) + height)))$$

$$min\_y = min((mv0\_y >> 4), min((mv1\_y >> 4), min((mv2\_y >> 4) + height, (mv3\_x >> 4) + height)))$$

Then, memory_access is as follows:

$$memory\_access = (max\_x - min\_x + 7) * (max\_y - min\_y + 7)$$

Example 1. An apparatus includes:

a memory; and
a processor, coupled to the memory and configured to:

obtain candidate motion vectors (motion vector, MV) corresponding to a neighboring block adjacent to a current block in a video frame;
generate a candidate list of the candidate MVs;
select final MVs from the candidate list; and
apply a constraint to the final MVs or a transform to obtain constrained MVs.

Example 2. The apparatus according to example 1, where the constraint specifies that a first absolute value of a first difference between a first final MV and a second final MV is less than or equal to a first quantity, and the first quantity is determined by the threshold and a width of the current block; and the constraint further specifies that a second absolute value of a second difference between a third final MV and a fourth final MV is less than or equal to a second quantity, and the second quantity is determined by the threshold and a height of the current block.

Example 3. The apparatus according to example 1, where the constraint specifies that a first square root of a first quantity is less than or equal to a second quantity, where the first quantity is determined by a first final MV, a second final MV, a third final MV, a fourth final MV, and a width of the current block, and the second quantity is determined by the width and a threshold.

Example 4. The apparatus according to example 1, where the constraint specifies that a first quantity is less than or equal to a second quantity, where the first quantity is determined by a first width of a transform block, a length of an interpolating filter, and a first height of the transform block, and the second quantity is determined by a threshold, a second width of the current block, and a second height of the current block.

Example 5. The apparatus according to example 4, where the threshold is specific to uni-prediction or bi-prediction.

Example 6. The apparatus according to example 1, where the constraint specifies that a quantity is less than or equal to a threshold, where the quantity is directly proportional to a first memory bandwidth and a second memory bandwidth, and the quantity is indirectly proportional to a width of the current block and a height of the current block.

Example 7. The apparatus according to example 1, where the constraint specifies that a first difference between a first width of a transform block and a second width of the current block is less than or equal to a threshold, and the constraint further specifies that a second difference between a first height of the transform block and a second height of the current block is less than or equal to the threshold.

Example 8. The apparatus according to example 1, where the processor is further configured to:

calculate a motion vector field (motion vector field, MVF) based on the constrained MVs;
perform motion compensation prediction (motion compensation prediction, MCP) based on the MVF to generate a prediction block of the current block; and
encode an MV index.

Example 9. The apparatus according to example 1, where the processor is further configured to:

decode an MV index;
calculate a motion vector field (motion vector field, MVF) based on the constrained MVs; and
perform motion compensation prediction (motion compensation prediction, MCP) based on the MVF to generate a
prediction block of the current block.

Example 10. A method includes:

obtaining candidate motion vectors (motion vector, MV) corresponding to a neighboring block adjacent to a current
block in a video frame;
generating a candidate list of the candidate MVs;
selecting final MVs from the candidate list; and
applying a constraint to the final MVs or a transform to obtain constrained MVs.

Example 11. An apparatus includes:

a memory; and
a processor, coupled to the memory and configured to:

obtain candidate motion vectors (motion vector, MV) corresponding to a neighboring block adjacent to a current
block in a video frame;
generate a candidate list of the candidate MVs;
apply a constraint to the candidate MVs or a transform to obtain constrained MVs; and
select final MVs from the constrained MVs.

Example 12. The apparatus according to example 11, where the constraint specifies that a first absolute value
of a first difference between a first final MV and a second final MV is less than or equal to a first quantity, and the first
quantity is determined by the threshold and a width of the current block; and the constraint further specifies that based
on the threshold and a height of the current block, a second absolute value of a second difference between a third final
MV and a fourth final MV is less than or equal to a second quantity, and the second quantity is determined by the
threshold and the height of the current block.

Example 13. The apparatus according to example 11, where the constraint specifies that a first square root of
a first quantity is less than or equal to a second quantity, where the first quantity is determined by a first final MV, a
second final MV, a third final MV, a fourth final MV, and a width of the current block, and the second quantity is determined
based on the width and a threshold.

Example 14. The apparatus according to example 11, where the constraint specifies that a first quantity is less
than or equal to a second quantity, where the first quantity is determined by a first width of a transform block, a length
of an interpolating filter, and a first height of the transform block, and the second quantity is determined by a threshold,
a second width of the current block, and a second height of the current block.

Example 15. The apparatus according to example 11, where the constraint specifies that a quantity is less than
or equal to a threshold, where the quantity is directly proportional to a first memory bandwidth and a second memory
bandwidth, and the quantity is indirectly proportional to a width of the current block and a height of the current block.

Example 16. The apparatus according to example 11, where the constraint specifies that a first difference
between a first width of a transform block and a second width of the current block is less than or equal to a threshold,
and the constraint further specifies that a second difference between a first height of the transform block and a second
height of the current block is less than or equal to the threshold.

Example 17. The apparatus according to example 11, where the processor is further configured to:

calculate a motion vector field (motion vector field, MVF) based on the constrained MVs;
perform motion compensation prediction (motion compensation prediction, MCP) based on the MVF to generate a
prediction block of the current block; and
encode an MV index.

Example 18. The apparatus according to example 11, where the processor is further configured to:

decode an MV index;
calculate a motion vector field (motion vector field, MVF) based on the constrained MVs; and
perform motion compensation prediction (motion compensation prediction, MCP) based on the MVF to generate a
prediction block of the current block.

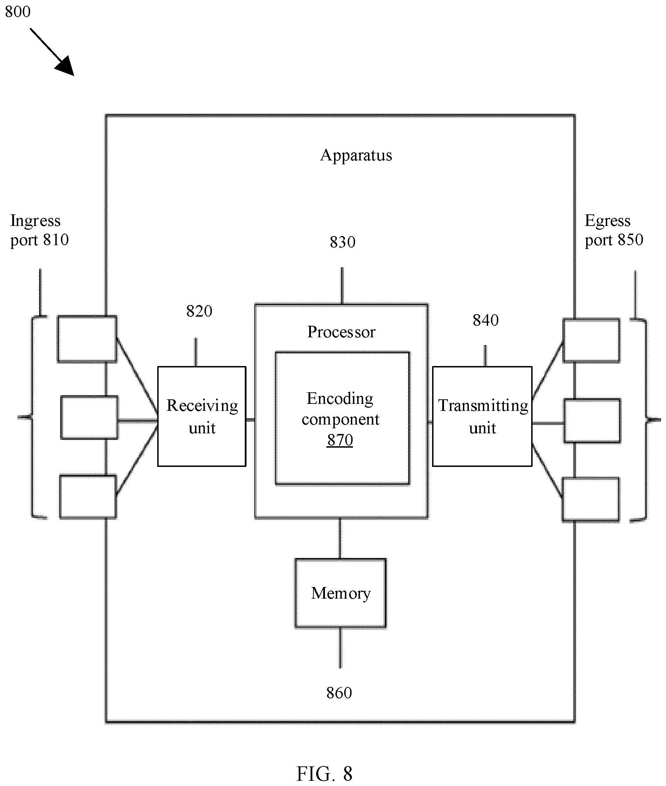

FIG. 8 is a schematic diagram of an apparatus 800 according to an embodiment of this application. The apparatus 800 can implement disclosed embodiments. The apparatus 800 includes an ingress port 810 and RX 820 for receiving data; a processor, logic unit, baseband unit, or CPU 830 for processing data; TX 840 and an egress port 850 for transmitting data; and a memory 860 for storing data. The apparatus 800 may further include an OE component, an EO component, or an RF component, which is coupled to the ingress port 810, the RX 820, the TX 840, and the egress port 850 for incoming or outgoing of optical signals, electrical signals, or RF signals.

The processor 830 is any combination of hardware, middleware, firmware, or software. The processor 830 includes any combination of one or more CPU chips, kernels, FPGAs, ASICs, or DSPs. The processor 830 communicates with the ingress port 810, the RX 820, the TX 840, the egress port 850, and the memory 860. The processor 830 includes an encoding component 870 that implements disclosed embodiments. Therefore, including the encoding component 870 significantly improves a function of the apparatus 800 and enables the apparatus 800 to switch to a different state. Alternatively, the memory 860 stores the encoding component 870 as instructions, and the processor 830 executes these instructions.

The memory 860 includes any combination of a magnetic disk, a tape drive, or a solid-state drive. The apparatus 800 may use the memory 860 as an overflow data storage device, to store a program when the apparatus 800 selects the program for execution, and to store instructions and data that the apparatus 800 reads during the execution of the program. The memory 860 may be volatile or non-volatile, and may be any combination of a ROM, a RAM, a TCAM, or a SRAM.

In an example embodiment, the apparatus includes a storage element; and a processor, coupled to the storage element and configured to: obtain candidate MVs corresponding to a neighboring block adjacent to a current block in a video frame, generate a candidate list of the candidate MVs, select final MVs from the candidate list, and apply a constraint to the final MVs or a transform to obtain constrained MVs.

While several specific embodiments have been provided in this application, it may be understood that the disclosed systems and methods might be embodied in many other specific forms without departing from the spirit or scope of this application. The examples in this application are considered as illustrative but not limiting, and this application is not limited to the details given herein. For example, the various elements or components may be combined or integrated in another system or some features may be omitted or not implemented.

In addition, techniques, systems, subsystems, and methods described and illustrated in the various embodiments as discrete or separate may be combined or integrated with other systems, components, techniques, or methods without departing from the scope of this application. Other items shown or discussed as coupled may be directly coupled or may be indirectly coupled or in communication through some interface, device, or intermediate component whether electrically, mechanically, or otherwise. Other examples of changes, substitutions, and alterations are ascertainable by a person skilled in the art and may be made without departing from the spirit and scope disclosed herein.

**Claims**

1. A method, comprising:

   obtaining motion vectors of control points of a current block;
   calculating a motion vector of each subblock in the current block based on a motion vector that is of a control point of the current block and that meets a constraint condition; and
   obtaining a prediction block of each subblock based on the motion vector of each subblock in the current block.

2. The method according to claim 1, wherein that a motion vector of a control point of the current block meets the constraint condition comprises: a width of a transform block of the current block and a height of the transform block meet the constraint condition, wherein the transform block of the current block is obtained by using the motion vector of the control point of the current block.

3. The method according to claim 2, wherein the width of the transform block and the height of the transform block are separately obtained through calculation based on motion vectors of four control points of the current block, a width of the current block, or a height of the current block.

4. The method according to claim 2, wherein the constraint condition comprises: a first quantity is less than or equal to a second quantity, wherein the first quantity is determined based on the width of the transform block, a length of an affine interpolating filter, and the height of the transform block; and
   the second quantity is determined by a threshold, a length of a translational interpolating filter, a width of the current block, and a height of the current block.

5. The method according to claim 4, wherein the first quantity is obtained through calculation according to the following formula: $(w' + T' - 1) * (h' + T' - 1)$, wherein w' is the width of the transform block, h' is the height of the transform block, and T' is the length of the affine interpolating filter.

6. The method according to claim 4 or 5, wherein the second quantity is obtained through calculation according to the following formula: $(w + T - 1 + w/ext) * (h + T - 1 + h/ext)$, wherein w is the width of the current block, h' is the height of the current block, T is the length of the translational interpolating filter, and ext is the threshold.

7. The method according to claim 2, wherein the constraint condition comprises: a third quantity is less than or equal to a fourth quantity, and a fifth quantity is less than or equal to a sixth quantity, wherein the third quantity is determined by the width of the transform block and a length of an affine interpolating filter; the fifth quantity is determined by the height of the transform block and the length of the affine interpolating filter; the fourth quantity is determined by a threshold, a length of a translational interpolating filter, and a width of the current block; and the sixth quantity is determined by the threshold, the length of the translational interpolating filter, and a height of the current block.

8. An encoder, comprising a processing circuit, configured to perform the method according to any one of claims 1 to 7.

9. A computer program product, comprising program code, used to perform the method according to any one of claims 1 to 7.

10. A decoder, comprising:

   one or more processors; and
   a non-transitory computer-readable storage medium, wherein the non-transitory computer-readable storage medium is coupled to the processor and stores a program to be executed by the processor, wherein when the processor executes the program, the decoder is enabled to perform the method according to any one of claims 1 to 7.

11. A decoder, comprising a processing circuit, configured to perform the method according to any one of claims 1 to 7.

100

Source device

Video
generator
120

Encoder
130

Output
interface
140

110

Medium
150

Target device

Display
190

Decoder
180

Input
interface
170

160

FIG. 1

200

NB
250

NB
260

NB
270

NB
280

NB
240

Current block
210

NB
230

NB
220

$v$

$v_1$

$h$

$w$

FIG. 2

300

$(x_0', y_0')$

$(x_1', y_1')$

$h'$

$v$

$v_1$

Transform
block 320

$(x_0, y_0)$

$(x_1, y_1)$

$(x_2', y_2')$

Current
block 310

$v_2$

$h$

$(x_3', y_3')$

$v_3$

$(x_2, y_2)$

$(x_3, y_3)$

$w'$

$w$

FIG. 3

400

```
        ┌─────────────┐
        │    Start    │
        └──────┬──────┘
               │
               ▼
```

410 ── Obtain candidate MVs

420 ── Generate a candidate list of the candidate MVs

430 ── Select final MVs from the candidate list

440 ── Apply a constraint to the final MVs or a transform to obtain constrained MVs

450 ── Calculate an MVF based on the constrained MVs

460 ── Perform MCP based on the MVF to generate a prediction block of a current block

470 ── Encode an MV index

```
        ┌─────────────┐
        │     End     │
        └─────────────┘
```

FIG. 4

500

```
                        ┌─────────────┐
                        │    Start    │
                        └──────┬──────┘
                               │
                               ▼
510 ──────┌──────────────────────────────────────────────┐
          │            Decode an MV index                 │
          └──────────────────────┬───────────────────────┘
                                 │
                                 ▼
520 ──────┌──────────────────────────────────────────────┐
          │            Obtain candidate MVs               │
          └──────────────────────┬───────────────────────┘
                                 │
                                 ▼
530 ──────┌──────────────────────────────────────────────┐
          │   Generate a candidate list of the candidate MVs │
          └──────────────────────┬───────────────────────┘
                                 │
                                 ▼
540 ──────┌──────────────────────────────────────────────┐
          │      Select final MVs from the candidate list │
          └──────────────────────┬───────────────────────┘
                                 │
                                 ▼
550 ──────┌──────────────────────────────────────────────┐
          │ Apply a constraint to the final MVs or a transform to │
          │          obtain constrained MVs               │
          └──────────────────────┬───────────────────────┘
                                 │
                                 ▼
560 ──────┌──────────────────────────────────────────────┐
          │     Calculate an MVF based on the constrained │
          │                    MVs                        │
          └──────────────────────┬───────────────────────┘
                                 │
                                 ▼
570 ──────┌──────────────────────────────────────────────┐
          │ Perform MCP based on the MVF to generate a prediction block │
          │              of a current block               │
          └──────────────────────┬───────────────────────┘
                                 │
                                 ▼
                        ┌─────────────┐
                        │     End     │
                        └─────────────┘
```

FIG. 5

600

```
            ┌─────────┐
            │  Start  │
            └────┬────┘
                 │
                 ▼
610 ──── ┌──────────────────────────────────────────────┐
         │           Obtain candidate MVs               │
         └──────────────────┬───────────────────────────┘
                            │
                            ▼
620 ──── ┌──────────────────────────────────────────────┐
         │    Generate a candidate list of the          │
         │              candidate MVs                   │
         └──────────────────┬───────────────────────────┘
                            │
                            ▼
630 ──── ┌──────────────────────────────────────────────┐
         │  Apply a constraint to the candidate MVs or  │
         │   a transform to obtain constrained MVs      │
         └──────────────────┬───────────────────────────┘
                            │
                            ▼
640 ──── ┌──────────────────────────────────────────────┐
         │    Select final MVs from the constrained MVs │
         └──────────────────┬───────────────────────────┘
                            │
                            ▼
650 ──── ┌──────────────────────────────────────────────┐
         │  Calculate an MVF based on the constrained   │
         │                    MVs                       │
         └──────────────────┬───────────────────────────┘
                            │
                            ▼
660 ──── ┌──────────────────────────────────────────────┐
         │  Perform MCP based on the MVF to generate a  │
         │     prediction block of a current block      │
         └──────────────────┬───────────────────────────┘
                            │
                            ▼
670 ──── ┌──────────────────────────────────────────────┐
         │            Encode an MV index                │
         └──────────────────┬───────────────────────────┘
                            │
                            ▼
                    ┌─────────┐
                    │   End   │
                    └─────────┘
```

FIG. 6

700

| | |
|---|---|
| | Start |
| 710 | Decode an MV index |
| 720 | Obtain candidate MVs |
| 730 | Generate a candidate list of the candidate MVs |
| 740 | Apply a constraint to final MVs or a transform to obtain constrained MVs |
| 750 | Select the final MVs from the candidate list |
| 760 | Calculate an MVF based on the constrained MVs |
| 770 | Perform MCP based on the MVF to generate a prediction block of a current block |
| | End |

FIG. 7

800

Apparatus

Ingress
port 810

830

Egress
port 850

820

840

Receiving
unit

Processor

Encoding
component
870

Transmitting
unit

Memory

860

FIG. 8

FIG. 9

## INTERNATIONAL SEARCH REPORT

| International application No. |
| --- |
| **PCT/CN2021/133290** |

**A.    CLASSIFICATION OF SUBJECT MATTER**

H04N 19/103(2014.01)i

According to International Patent Classification (IPC) or to both national classification and IPC

**B.    FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; JVET: 编码, 约束, 变换, 仿射, 运动向量, 子块, 滤波器, encode, constraint, transformation, affine, motion vector, subblock, filter

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 111372086 A (HUAWEI TECHNOLOGIES CO., LTD.) 03 July 2020 (2020-07-03) description paragraphs [0130], [0278]-[0351], [0582]-[0587] | 1-5, 7-11 |
| Y | CN 110291790 A (HUAWEI TECHNOLOGIES CO., LTD.) 27 September 2019 (2019-09-27) description paragraphs [0056]-[0076], [0103]-[0134] | 1-5, 7-11 |
| A | CN 111316648 A (QUALCOMM INC.) 19 June 2020 (2020-06-19) entire document | 1-11 |
| A | CN 110876282 A (HUAWEI TECHNOLOGIES CO., LTD.) 10 March 2020 (2020-03-10) entire document | 1-11 |
| A | US 2020275118 A1 (QUALCOMM INCORPORATED) 27 August 2020 (2020-08-27) entire document | 1-11 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 January 2022** | **08 February 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/133290**

| Patent document cited in search report | | | Publication date (day/month/year) | Patent family member(s) | | | Publication date (day/month/year) |
|---|---|---|---|---|---|---|---|
| CN | 111372086 | A | 03 July 2020 | WO | 2020135615 | A1 | 02 July 2020 |
| | | | | CN | 111372086 | B | 03 August 2021 |
| CN | 110291790 | A | 27 September 2019 | WO | 2018184589 | A1 | 11 October 2018 |
| | | | | US | 2018295381 | A1 | 11 October 2018 |
| | | | | US | 10873760 | B2 | 22 December 2020 |
| | | | | EP | 3566442 | A1 | 13 November 2019 |
| | | | | EP | 3566442 | A4 | 05 February 2020 |
| | | | | JP | 2020509711 | A | 26 March 2020 |
| | | | | JP | 6903149 | B2 | 14 July 2021 |
| | | | | KR | 20190112082 | A | 02 October 2019 |
| | | | | KR | 102255665 | B1 | 24 May 2021 |
| | | | | IN | 201937032422 | A | 11 October 2019 |
| CN | 111316648 | A | 19 June 2020 | WO | 2019099540 | A1 | 23 May 2019 |
| | | | | EP | 3711300 | A1 | 23 September 2020 |
| | | | | US | 2019149838 | A1 | 16 May 2019 |
| | | | | TW | 201924350 | A | 16 June 2019 |
| | | | | VN | 72970 | A | 25 September 2020 |
| | | | | IN | 202027013951 | A | 04 September 2020 |
| | | | | SG | 11202002885 | A1 | 28 May 2020 |
| CN | 110876282 | A | 10 March 2020 | US | 2021127116 | A1 | 29 April 2021 |
| | | | | EP | 3809704 | A1 | 21 April 2021 |
| | | | | EP | 3809704 | A4 | 28 April 2021 |
| | | | | WO | 2020006969 | A1 | 09 January 2020 |
| | | | | BR | 112020026992 | A2 | 06 April 2021 |
| | | | | KR | 20210022101 | A | 02 March 2021 |
| | | | | IN | 202147000401 | A | 08 January 2021 |
| | | | | VN | 77519 | A | 26 April 2021 |
| | | | | SG | 11202013202 | A1 | 28 January 2021 |
| | | | | JP | 2021529483 | A | 28 October 2021 |
| US | 2020275118 | A1 | 27 August 2020 | TW | 202041014 | A | 01 November 2020 |
| | | | | WO | 2020172292 | A1 | 27 August 2020 |

Form PCT/ISA/210 (patent family annex) (January 2015)